# EUROPEAN PATENT APPLICATION

(11) **EP 3 136 713 A1**
(43) Date of publication of application: **01.03.2017**
(21) Application number: 15783224.7
(22) Date of filing: 19.01.2015
(51) Int. Cl.: H04N 5/64, H04N 5/91, H04S 5/02

(54) **INFORMATION REPRODUCTION DEVICE, INFORMATION REPRODUCTION METHOD, INFORMATION RECORDING DEVICE, AND INFORMATION RECORDING METHOD**

(30) Priority: 22.04.2014 JP 2014087848
(71) Applicant: Sony Corporation, Tokyo 108-0075 (JP)
(72) Inventor: KON, Homare, Tokyo 108-0075 (JP); HASEGAWA, Yuichi, Tokyo 108-0075 (JP)
(74) Representative: Witte, Weller & Partner Patentanwälte mbB
(86) International application number: PCT/JP2015/051287
(87) International publication number: WO 2015/162947

(57) **Abstract**

To record and reproduce sound and an image so that content which entertains a viewer and which prevents the viewer from being bored is provided while realistic sensation is provided.

Upon recording, image information shot by a plurality of cameras is recorded together with position and posture information of each camera, and acoustic information from a plurality of sound sources is recorded together with position information of each sound source. Upon reproduction, an image at a position of a viewer (eye direction) is reproduced, and a sound image is localized at the position of the viewer so that content which entertains the viewer and which prevents the viewer from being bored is provided while sound with realistic sensation is provided.

## Description

### Technical Field

The technology disclosed in this specification relates to an information reproducing apparatus and an information reproducing method for reproducing recorded sound and a recorded image, and an information recording apparatus and an information recording method for recording information such as sound and an image.

### Background Art

When a movie or live content is reproduced, it is possible to provide realistic sensation to a viewer by localizing sound at a left side and a right side in accordance with an image.

For example, a 5.1 channel surrounded-sound system, which is a stereophonic reproduction system including five speakers and one subwoofer speaker, can play sound with realistic sensation for a listener by disposing the speakers according to stipulation of international telecommunication union radiocomuunications sector (ITU-R BS775) and outputting different sound waves from speakers corresponding to respective channels.

The stereophonic reproduction system has a problem that it has a narrow range in which target localization of a sound image can be obtained. In contrast to this, a multichannel audio system is known which records a wavefront created by a sound source at an original sound field and reproduces a wavefront using a wavefront synthesis technology in space different from a current sound field based on the recorded wavefront. For example, there has been a proposal for a wavefront synthesis signal converting apparatus which calculates a wavefront synthesis reproduction signal according to a reproducing apparatus which is actually used from assumed specifications of the number of speakers or an interval of speakers and reproduces a synthesized sound field (see, for example, Patent Literature 1).

Further, a method is known which assigns a head-related transfer function (HRTF) from a sound source position at which sound is desired to be localized to both ears of the listener to a sound source signal and localizes a sound image as if there were the sound source at a desired position. For example, there has been a proposal for an acoustic reproducing apparatus which, when sound reproduced from a plurality of two or more speakers provided around the listener is localized at a virtual position, emphasizes an effect of localization of a virtual sound image and improves listener envelopment of a sound field by calculating the center of gravity of a multichannel input signal and reproducing the input signal while reflecting a weight coefficient determined according to a position of the center of gravity to virtual sound image generation processing (see, for example, Patent Literature 2).

### Citation List

### Patent Literature

Patent Literature 1: JP 2013-128314A
Patent Literature 2: JP 2011-211312A

### Summary of Invention

An object of the technology disclosed in this specification is to provide excellent information reproducing apparatus and information reproducing method which can reproduce recorded sound and a recorded image.

### Technical Problem

Further, an object of the technology disclosed in this specification is to provide excellent information recording apparatus and information recording method which can preferably record information such as sound and an image.

### Solution to Problem

The present application has been made in view of the above-described problems, and, according to the technology described in claim 1, there is provided an information reproducing apparatus including a position information calculating unit configured to calculate a position of a viewer in space in which an image and sound are provided, an image processing unit configured to process an image at the position of the viewer based on image information recorded with position and posture information of a camera, and a sound processing unit configured to localize a sound image at the position of the viewer based on sound information recorded with position information of a sound source.

According to the technology described in claim 2 of the present application, the position information calculating unit of the information reproducing apparatus according to claim 1 is configured to calculate the position of the viewer based on the position and posture information of the camera used for shooting.

According to the technology described in claim 3 of the present application, the position information calculating unit of the information reproducing apparatus according to claim 1 is configured to calculate the position of the viewer based on actual motion or an actual position of the viewer.

According to the technology described in claim 4 of the present application, the position information calculating unit of the information reproducing apparatus according to claim 1 is configured to calculate the position of the viewer based on a position of a center of gravity among a plurality of cameras.

According to the technology described in claim 5 of the present application, the position information calculating unit of the information reproducing apparatus according to claim 1 is configured to calculate the position of the viewer based on a position of a center of gravity among a plurality of cameras weighted based on a frequency of punning and switching.

According to the technology described in claim 6 of the present application, the image processing unit of the information reproducing apparatus according to claim 1 is configured to generate an image at the position of the viewer based on an image of a camera shot by a camera at the position of the viewer.

According to the technology described in claim 7 of the present application, the image processing unit of the information reproducing apparatus according to claim 1 is configured to generate a viewpoint interpolated image at the position of the viewer using images shot by a plurality of cameras.

According to the technology described in claim 8 of the present application, the sound processing unit of the information reproducing apparatus according to claim 7 is configured to localize a sound image at a position at which a viewpoint is interpolated.

According to the technology described in claim 9 of the present application, the sound processing unit of the information reproducing apparatus according to claim 7 is configured to localize a sound image based on a position at which a viewpoint of utterance information collected from the viewer is interpolated.

According to the technology described in claim 10 of the present application, the image processing unit of the information reproducing apparatus according to claim 7 is configured to display an avatar or position information of the viewer at a location corresponding to the viewer in the viewpoint interpolated image.

According to the technology described in claim 11 of the present application, the sound processing unit of the information reproducing apparatus according to claim 1 is configured to convert absolute position information of a sound source included in a viewpoint image from the position of the viewer into a relative position with respect to the position of the viewer to localize a sound image of a sound image in the viewpoint image.

Further, according to the technology described in claim 12 of the present application, there is provided an information reproducing method including a position information calculating step of calculating a position of a viewer in space in which an image and sound are provided, an image processing step of processing an image at the position of the viewer based on image information recorded with position and posture information of a camera, and a sound processing step of localizing a sound image at the position of the viewer based on sound information recorded with position information of a sound source.

Further, according to the technology described in claim 13 of the present application, there is provided an information recording apparatus including an image information recording unit configured to record an image shot by a camera and position and posture information of the camera, and a sound information recording unit configured to record position information of a sound source.

According to the technology described in claim 14 of the present application, the image information recording unit of the information recording apparatus according to claim 13 is configured to record the image shot by the camera and the position and posture information of the camera in a packet form for an image, and the sound information recording unit is configured to record the position information of the sound source in a packet form for sound.

According to the technology described in claim 15 of the present application, the image information recording unit of the information recording apparatus according to claim 13 is configured to record the image shot by the camera and the position and posture information of the camera in tracks for an image, and the sound information recording unit is configured to record the position information of the sound source in a track for sound.

According to the technology described in claim 16 of the present application, the image information recording unit of the information recording apparatus according to claim 13 is configured to record the shot image received from the camera and position and posture information received from a camera position sensor.

According to the technology described in claim 17 of the present application, the sound information recording unit of the information recording apparatus according to claim 13 is configured to record the position information of the sound source received from a sound source detecting apparatus.

According to the technology described in claim 18 of the present application, the sound information recording unit of the information recording apparatus according to claim 13 is configured to record sound information received from a sound source detecting apparatus or sound information recorded later together with the position information of the sound source.

According to the technology described in claim 19 of the present application, the information recording apparatus according to claim 13 is configured to record the position and posture information of the camera and the position information of the sound source in synchronization with a synchronization signal (clock) for image recording or based on a timing signal of frequency dividing or decimation.

Further, according to the technology described in claim 20 of the present application, there is provided an information recording method including a step of receiving an image shot by a camera and position and posture information of the camera, a step of recording the received image shot by the camera and the received position and posture information of the camera, a step of receiving position information of a sound source, and a sound information recording unit configured to record the received position information of the sound source.

### Advantageous Effects of Invention

According to the technology described in this specification, it is possible to provide excellent information recording apparatus and information recording method, and information reproducing apparatus and information reproducing method which can record and reproduce information of sound and an image so that content which entertains a viewer and which prevents the viewer from being bored is provided while realistic sensation is provided.

Note that the advantageous effects described in this specification are merely for the sake of example, and the advantageous effects of the present invention are not limited thereto. Furthermore, in some cases the present invention may also exhibit additional advantageous effects other than the advantageous effects given above.

Further objectives, features, and advantages of the technology disclosed in this specification will be clarified by a more detailed description based on the exemplary embodiments discussed hereinafter and the attached drawings.

### Brief Description of Drawings

[FIG. 1] FIG. 1 is a diagram schematically illustrating a configuration example of a recording system 100 which records information of an image and sound.
[FIG. 2] FIG. 2 is a diagram schematically illustrating an aspect where cameras 110-1, 110-2, ..., and microphones 120-1, 120-2, ..., are disposed in real space.
[FIG. 3] FIG. 3 is a diagram schematically illustrating another configuration example of a recording system 300 which records information of an image and sound.
[FIG. 4] FIG. 4 is a diagram schematically illustrating an aspect where cameras 310-1, 310-2, ..., and sound position sensors 320-1, 320-2, ..., are disposed in real space.
[FIG. 5] FIG. 5 is a diagram illustrating a recording format example for recording an image (a moving image or a still image) shot by a camera together with position and posture information of the camera, while recording sound information from a sound source such as an utterer together with position information of the sound source.
[FIG. 6] FIG. 6 is a diagram illustrating another example of the recording format for recording the image (the moving image or the still image) shot by the camera together with the position and posture information of the camera, while recording the sound information from the sound source such as the utterer together with the position information of the sound source.
[FIG. 7] FIG. 7 is a diagram illustrating a configuration example of a packet 500 for transferring position information of the camera or the utterer within the recording system 300.
[FIG. 8] FIG. 8 is a diagram illustrating data included in the position information of the camera or the sound source.
[FIG. 9] FIG. 9 is a diagram (perspective view) illustrating an exterior configuration of a head-mounted display 900.
[FIG. 10] FIG. 10 is a diagram (left side view) illustrating the exterior configuration of the head-mounted display 900.
[FIG. 11] FIG. 11 is a diagram schematically illustrating a configuration example of an image display system 1100 which reproduces image information and sound information recorded with the position information.
[FIG. 12] FIG. 12 is a diagram schematically illustrating a modified example of the image display system 1100.
[FIG. 13] FIG. 13 is a diagram illustrating a mechanism for displaying an image following motion of the head of a user at a display apparatus 1140 in the image display system 1100 illustrated in FIG. 11 or FIG. 12.
[FIG. 14] FIG. 14 is a diagram schematically illustrating a configuration of a drawing processing unit 1132 within a drawing apparatus 1130.
[FIG. 15] FIG. 15 is a flowchart illustrating processing procedure for reproducing an image and sound.
[FIG. 16] FIG. 16 is a diagram illustrating an aspect where a virtual point is determined and disposed in space in which an image and sound are provided to the user.
[FIG. 17] FIG. 17 is a diagram illustrating an aspect where when the image and the sound are reproduced, a sound image is localized at the virtual point.
[FIG. 18] FIG. 18 is a diagram illustrating an aspect where the image and the sound are reproduced at the head-mounted display.
[FIG. 19] FIG. 19 is a diagram illustrating an example where images of viewpoints disposed at arbitrary locations are presented.
[FIG. 20] FIG. 20 is a diagram illustrating an aspect where a viewpoint interpolated image is reproduced at the head-mounted display.
[FIG. 21] FIG. 21 is a diagram illustrating an aspect where wearers of the head-mounted displays which reproduce images are also handled as uttering objects, and sound images of uttered content are localized.

### Description of Embodiment

An embodiment of the technology disclosed in this specification will be described in detail below with reference to the drawings.

When a sound image is localized using a method such as a wavefront synthesis technology and a head transfer function (see, for example, Patent Literatures 1 and 2), it can be considered that, typically, a relative position from a camera to an object (an utterer, a sound source) is recorded when an image and sound are recorded, and a sound image is localized according to relative position information upon reproduction.

If shooting is performed using one camera, it is possible to provide realistic sensation using such a sound image localization method. However, even if an image from one camera is continued to be presented as live content, such an image is not interesting for a viewer.

By shooting an image of the entire circumference using a plurality of cameras, and, upon reproduction, by showing an image in which an angle is changed as appropriate and the focus is zoomed or moved, it is possible to provide content which entertains a viewer and prevents the viewer from being bored.

However, when a camera angle is switched, because the relative position from the camera to the sound source also changes, a position at which the sound image is localized drastically changes, which is unnatural.

Therefore, in the technology described in this specification, when the information of the image and the sound is recorded, the image information shot by a plurality of cameras is recorded together with the position and posture information of each camera, while sound information from a plurality of sound sources is recorded together with position information of each sound source. Then, upon reproduction, by setting the positon of the viewer at a certain point, and reproducing an image at the position of the viewer (eye direction) while localizing a sound image at the position of the viewer, it is possible to provide content which entertains the viewer and which prevents the viewer from being bored, and provide natural sound with realistic sensation. It is only necessary to set the position of the viewer at a typical position such as, for example, the center of space in which the image is to be provided, and the position of the viewer may be a position of the center of gravity of the plurality of cameras used for shooting.

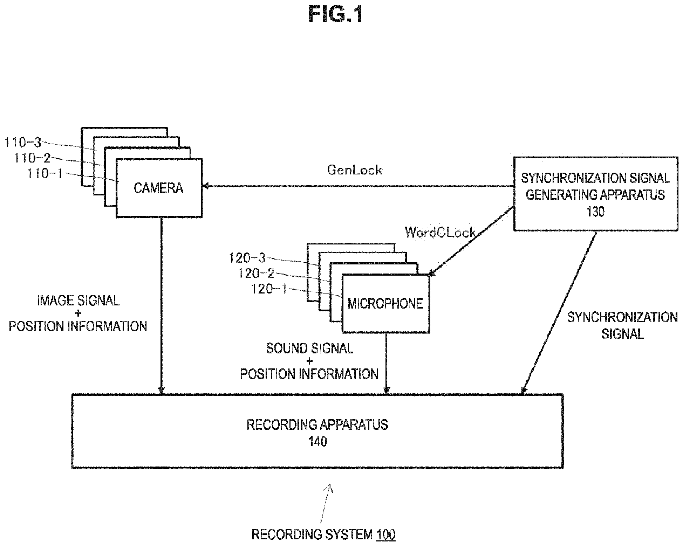

FIG. 1 schematically illustrates a configuration example of the recording system 100 which records the information of the image and the sound. The illustrated recording system 100 includes a plurality of cameras 110-1, 110-2, ..., and a plurality of microphones 120-1, 120-2, ..., disposed in real space, a synchronization signal generating apparatus 130 configured to supply synchronization signals to the cameras 110-1, 110-2, ..., and the microphones 120-1, 120-2, ..., and a recording apparatus 140.

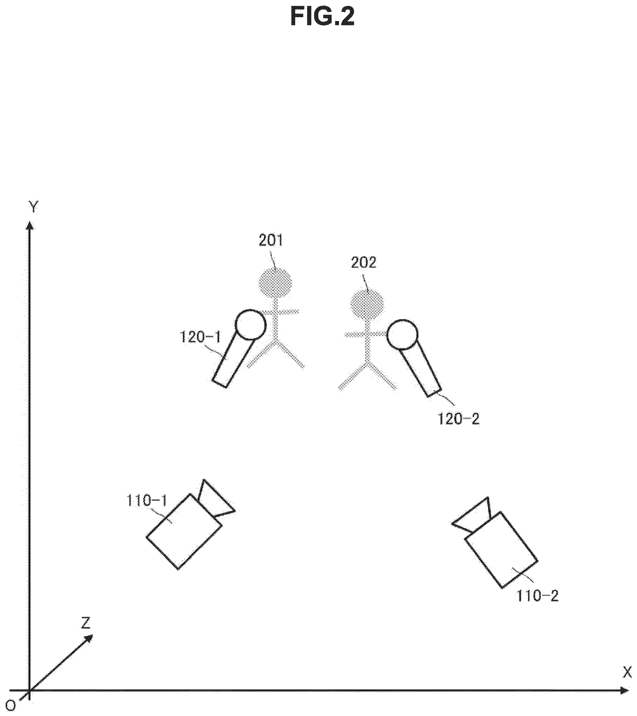

FIG. 2 schematically illustrates an aspect where the cameras 110-1, 110-2, ..., and the microphones 120-1, 120-2, ..., are disposed in real space. In the illustrated example, the microphones 120-1, 120-2, ..., are provided for each of utterers 201, 202, ..., (or the utterers 201, 202, ..., which become subjects respectively have the microphones 120-1, 120-2, ...). The respective cameras 110-1, 110-2, ..., shoot the utterers 201, 202, ..., from respective viewpoints.

The recording system 100 will be described with reference to FIG. 1 again. The synchronization signal generating apparatus 130 supplies a synchronization signal called GenLock, as, for example a master clock of 30 fps to each of the cameras 110-1, 110-2, .... The cameras 110-1, 110-2, ..., which receive the synchronization signal GenLock, shoot the utterers 201, 202, .... The recording apparatus 140 then records image signals of the cameras 110-1, 110-2, ..., in synchronization with each other based on the synchronization signal received from the synchronization signal generating apparatus 130.

Further, the synchronization signal generating apparatus 130 supplies a synchronization signal called WordClock to each of the microphones 120-1, 120-2, .... Each of the microphones 120-1, 120-2, ..., collects sound of the utterers 201, 202, ..., based on WordClock at a sampling rate of 48 kHz or 96 kHz. The recording apparatus 140 then records sound signals collected at the microphones 120-1, 120-2, ..., in synchronization with each other based on the synchronization signal received from the synchronization signal generating apparatus 130.

The synchronization signal generating apparatus 130 synchronizes WordClock with GenLock for an image and sound. Therefore, the image and the sound recorded at the recording apparatus 140 match with each other. Further, in addition to WordClock and GenLock, a time code defined in society of motion picture and television engineers (SMPTE) may be embedded.

Further, in the recording system 100 illustrated in FIG. 1 and FIG. 2, equipment such as the cameras 110-1, 110-2, ..., and the microphones 120-1, 120-2, ..., include a position information transmitter. The cameras 110-1, 110-2, ..., transmit the own position and posture information to the recording apparatus 140 together with the shot image signals. Further, the microphones 120-1, 120-2, ..., transmit the own (utterer) positon information to the recording apparatus 140 together with the collected sound signals.

The recording apparatus 140 records the image signals shot by the cameras 110-1, 110-2, ..., and the respective position and posture information in association with each other using the clock synchronized with GenLock. Further, the recording apparatus 140 records the sound information collected at the microphones 120-1, 120-2, ..., and the respective position information in association with each other using the clock synchronized with WordClock.

When the information of the image and sound is recorded, the recording system 100 illustrated in FIG. 1 records the image information shot by a plurality of cameras together with the position and posture information of the respective cameras, while recording sound information from a plurality of sound sources together with position information of the respective sound sources.

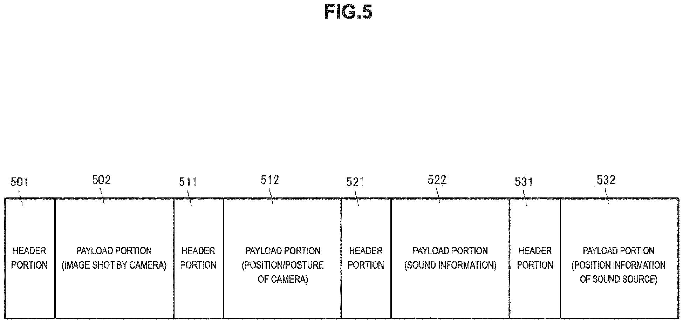

FIG. 5 illustrates an example of a recording format for recording the image (the moving image or the still image) shot by the camera and the position and posture information of the camera while recording sound information from the sound source such as an utterer together with position information of the sound source. In the illustrated recording format 500, the image information and the sound information are multiplexed for a packet.

In a header portion 501 of a packet in which the image shot by the camera is stored, information indicating that the image is an image shot by the m-th camera and presentation time are described, and a moving image (or a still image) shot by the camera is stored in a payload portion 502. In a header portion 511 of a packet in which the position and posture information of the camera is stored, information indicating that the image is an image of the position and posture of the m-th camera, and start time of sampling and a sampling rate are described, and position information of the camera is stored in a payload portion 512. Further, information regarding camera work such as a frequency of punning and switching may be stored together with the position and posture information in the payload portion 512. There is also a case where the information such as a frequency of punning and switching is used to determine a coordinate at which a sound image is preferably localized (which will be described later).

Further, in a header portion 521 of a packet in which sound information (sound of an utterer) is stored, information indicating that the sound is sound of the n-th utterer and presentation time are described, and sound information of the utterer is stored in a payload portion 522. Further, in a header portion 531 of a packet in which position information of the utterer which is a sound source is stored, information indicating that the image is position image of the n-th utterer, and start time of sampling and a sampling rate are described, and position information of the utterer is stored in a payload portion 532.

In the recording format illustrated in FIG. 5, the position and posture information of the camera and the position information of the sound source can be recorded in synchronization with a synchronization signal (clock) for image recording or based on a timing signal of frequency dividing or decimation.

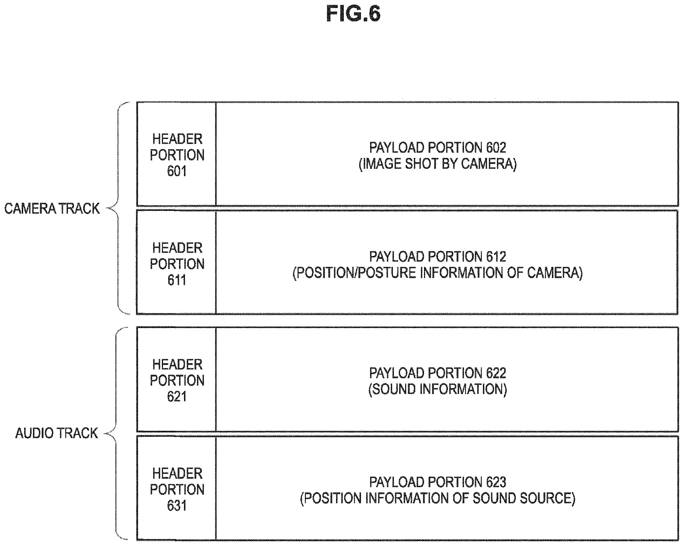

Further, FIG. 6 illustrates another example of the recording format for recording the image (the moving image or the still image) shot by the camera together with the position and posture information of the camera while recording sound information from a sound source such as an utterer together with position information of the sound source. In the illustrated recording format 600, the image information and the sound information are recorded in different tracks or different files.

In a header portion 601 of the track in which an image shot by a camera is stored, information indicating that the image is an image shot by the m-th camera and presentation time are described, and a moving image (or a still image) shot by the camera is stored in a payload portion 602. In a header portion 611 of the track in which position information of the camera is stored, information indicating that the image is an image of the position of the m-th camera, and start time of sampling and a sampling rate are described, and position information of the camera is stored in a payload portion 612. Further, in a header portion 621 of the track in which sound information (sound of an utterer) is stored, information indicating that the sound is sound of the n-th utterer and presentation time are described, and sound information of the utterer is stored in a payload portion 622. Further, in a header portion 631 of the track in which position information of an utterer which is a sound source is stored, information indicating that the image is an image of the position of the n-th utterer, start time of sampling and a sampling rate are described, and position information of the utterer is stored in a payload portion 632.

In the recording format illustrated in FIG. 6, the position and posture information of the camera and the position information of the sound source can be recorded in synchronization with a synchronization signal (clock) for image recording or based on a timing signal of frequency dividing or decimation.

Note that there is also a case where, like a movie, a TV drama or a music promotional film, a creating method of after-recording, that is, a method in which sound is separately recorded after shooting is performed is used. In such a case, it is important to record position information of utterers (a singer, a speaker, and a sound generating object) at the respective microphones 120-1, 120-2, ..., instead of collecting or recording sound at a shooting location. In this case, a packet in which sound information (sound of the utterer) in FIG. 5 is not required, and it is only necessary to provide a packet in which position information of the utterer which is a sound source is stored. Further, a track in which sound information (sound of the utterer) in FIG. 6 is stored is not required, and it is only necessary to provide a track in which position information of the utterer which is a sound source is stored.

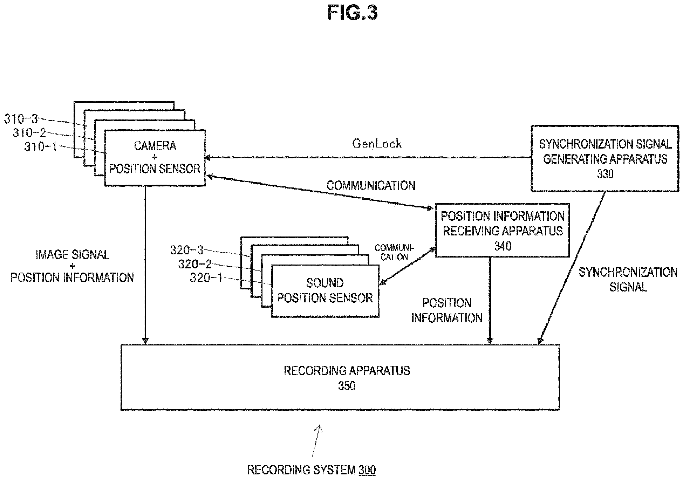

Further, FIG. 3 schematically illustrates another configuration example of the recording system 300 which records information of an image and sound.

The illustrated recording system 300 includes a plurality of cameras 310-1, 310-2, ..., disposed in real space. Each of the cameras 310-1, 310-2, ... includes a position sensor for detecting position information. The position sensor is configured by, for example, combining one or two or more of an acceleration sensor, a global positioning system (GPS) sensor and a geomagnetic sensor. Alternatively, the position sensor may acquire position information through image recognition from an image shot by the camera.

Further, the recording system 300 includes sound position sensors 320-1, 320-2, ..., which detect positions of respective objects which become sound sources such as utterers (singers, speakers, sound generating objects) in place of the microphones which collect sound at the shooting location. In the recording system 300, it is assumed that, like a movie, a TV drama or a music promotional film, a creating method of after-recording, that is, a method in which sound is separately recorded after shooting is performed is used.

Further, the recording system 300 includes a synchronization signal generating apparatus 330 configured to supply a synchronization signal to each of the cameras 310-1, 310-2, ..., and the sound position sensors 320-1, 320-2, ..., a position information receiving apparatus 340 configured to receive position information from each of the cameras 310-1, 310-2, ..., and the sound position sensors 320-1, 320-2, ..., and a recording apparatus 350.

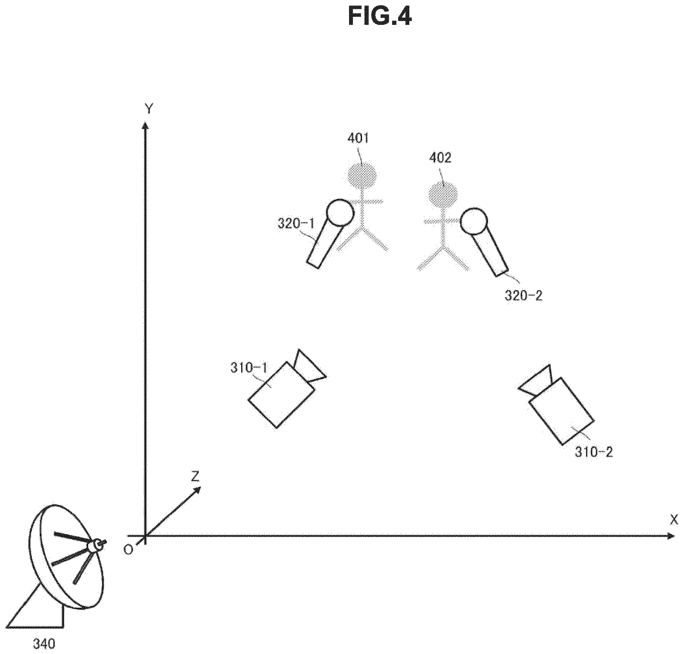

FIG. 4 schematically illustrates an aspect where the cameras 310-1, 310-2, ..., and the sound position sensors 320-1, 320-2, ..., are disposed in real space. In the illustrated example, the sound position sensors 320-1, 320-2, ..., are provided for each of the utterers 401, 402, ... (or the sound position sensors 320-1, 320-2, ... are respectively attached to the utterers 401, 402, ...). The cameras 310-1, 310-2, ..., respectively shoot the utterers 401, 402, ..., from the respective viewpoints.

The recording system 300 will be described with reference to FIG. 3 again. The synchronization signal generating apparatus 330 supplies a synchronization signal called GenLock, as, for example, a master clock of 30 fps to each of the cameras 310-1, 310-2, .... The cameras 310-1, 310-2, ..., which receive this synchronization signal, shoot the utterers 401, 402, .... Further, the position sensors of the cameras 310-1, 310-2, ..., acquire position information in synchronization with GenLock. The cameras 310-1, 310-2, ..., transmit image signals to the recording apparatus 350. Further, the position sensors of the cameras 310-1, 310-2, ... transmit the position information to a position information receiving apparatus 340, and the position information receiving apparatus 340 transmits the collected position information to the recording apparatus 350.

Further, the synchronization signal generating apparatus 330 supplies a synchronization signal called WordClock to each of sound position sensors 320-1, 320-2, .... The sound position sensors 320-1, 320-2, ..., acquire position information of the utterers 401, 402, ...., at a sampling rate such as 48 kHz and 96 kHz based on WordClock and transmit the position information to the positon information receiving apparatus 340. The position information receiving apparatus 340 transmits the collected position information to the recording apparatus 350.

In the recording system 300 illustrated in FIG. 3, the synchronization signals WordClock and Genlock for recording the position information and the posture information are in synchronization with each other. Specifically, the rate becomes equivalent to a rate of an image or audio, or becomes a rate which can be considered as a delay bound near movement of human sound.

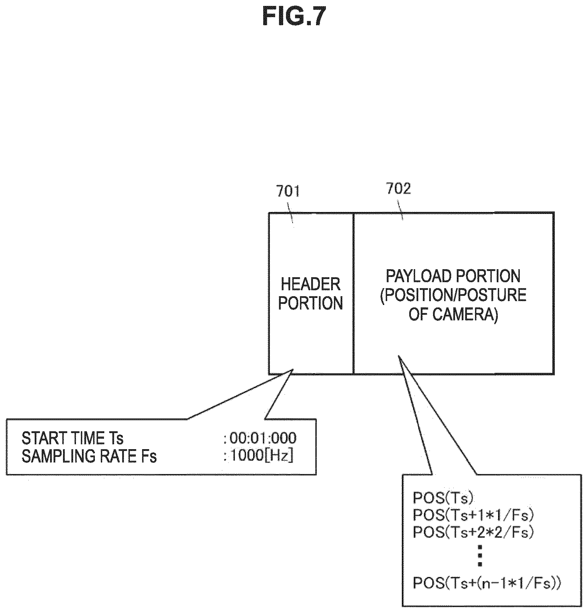

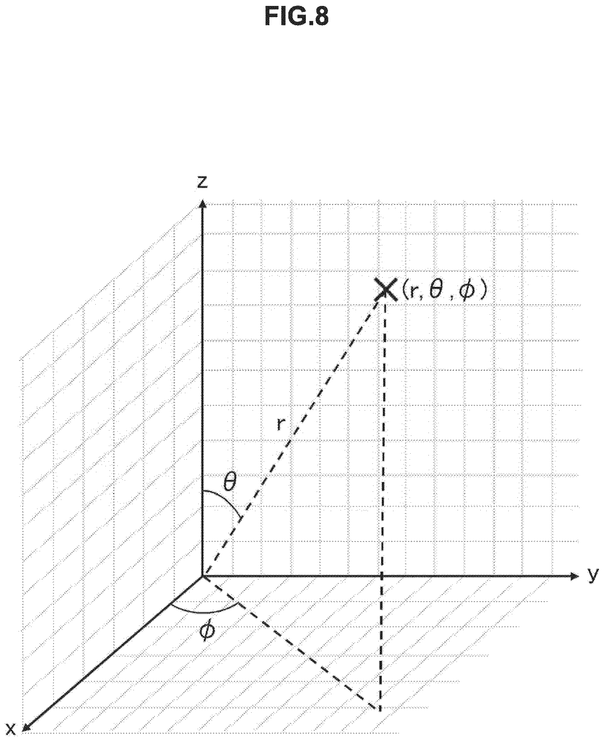

FIG. 7 illustrates a configuration example of a packet 700 for transmitting position information of the cameras 310-1, 310-2, ..., and the utterers (the sound position sensors 320-1, 320-2) within the recording system 300. The illustrated packet 700 is configured with a header portion 701 and a position information portion 702. In the header portion 701, start time Ts of sampling and a sampling rate Fs are described. Further, in the position information portion 702, position information POS (Ts), POS (Ts + 1 × 1 / Fs), POS (Ts + 2 × 2 / Fs), ..., detected for each of a sampling frequency 1/Fs from the start time Ts of sampling are stored. However, POS (t) is position information at time t. As illustrated in FIG. 8, it is assumed that POS (t) includes position information expressed with an xyz coordinate (x, y, z) or a polar coordinate (r, θ, ϕ) and posture information expressed with (Θ, Φ). The posture information may be expressed with a quaternion (a quaternion formed with a rotation axis (vector) and a rotation angle (scalar)).

When information of the image and sound is recorded, the recording system 300 illustrated in FIG. 3 records image information shot by a plurality of cameras together with position and posture information of each camera while recording sound information from a plurality of sound sources together with position information of each sound source. Note that, when a method of after-recording, that is, a method in which sound is separately recorded after shooting is performed, is used, as in a shooting method for a promotional film in related art, a recording track is applied to a position coordinated with the position of the utterer or replaced in coordination with the position information. Also in the recording system 300 illustrated in FIG. 3, with the packet configuration illustrated in FIG. 5 or the track configuration illustrated in FIG. 6, it is possible to record the image information and the sound information together with the position information.

When the image information and the sound information recorded together with the position information by the recording system 100 or 300 illustrated in FIG. 1 or FIG. 3 is reproduced, by reproducing an image at the position of the viewer (eye direction) while localizing a sound image at the position of the viewer, it is possible to provide content which entertains the viewer and which prevents the viewer from being bored and provide sound with realistic sensation.

For example, when the image information and the sound information recorded together with the position information and the posture information are reproduced in the image display system such as the head-mounted display, it is possible to provide an image of the whole space of 360 degrees, which follows motion of the head of the user. By moving a display region in a wide-angle image so as to cancel out the motion of the head detected by the head motion tracking apparatus attached to the head of the user, it is possible to reproduce an image following the motion of the head and give the user experience as if he/she overlooked the whole space.

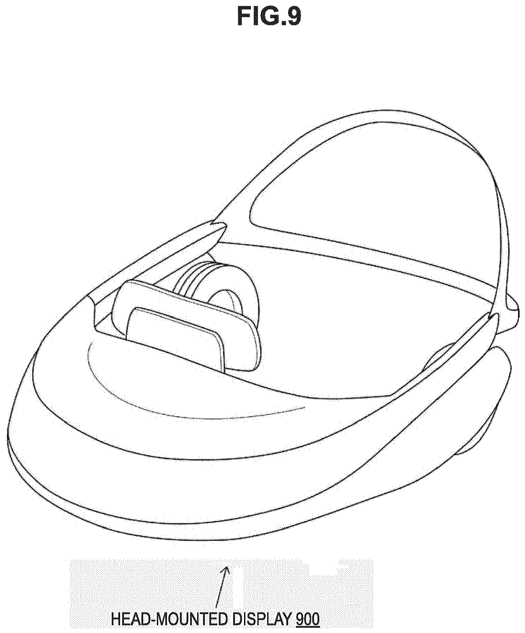

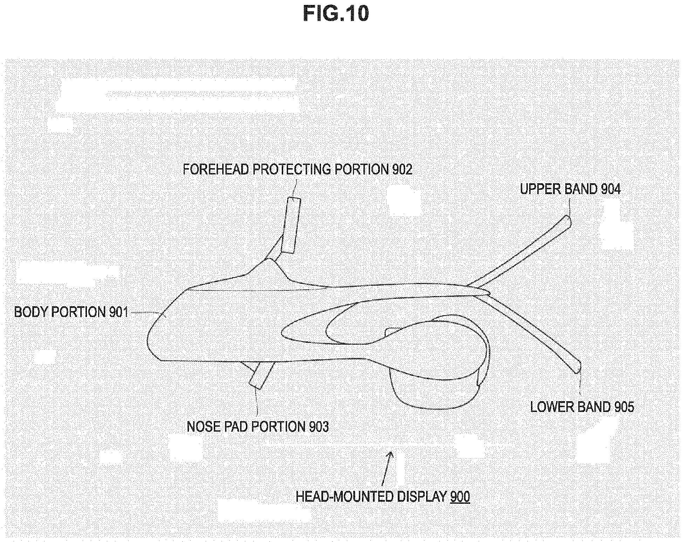

FIG. 9 and FIG. 10 illustrate exterior configurations of the head-mounted display 900 used by being fixed at the head or a face portion of the user who observes an image. However, FIG. 9 is a perspective view of the head-mounted display 900, while FIG. 10 is a left side view of the head-mounted display 900.

The illustrated head-mounted display 900 has a hat shape or a belt-like structure covering all the circumferences of the head, and can be worn while load on the user is reduced by weight of the apparatus being distributed to the whole of the head.

The head-mounted display 900 is formed with a body portion 901 including most parts including a display system, a forehead protecting portion 902 projecting from an upper face of the body portion 901, a head band diverging into an upper band 904 and a lower band 905, and left and right headphones. Within the body portion 901, a display unit and a circuit board are held. Further, a nose pad portion 903 to follow the back of the nose is provided below the body portion 901.

When the user wears the head-mounted display 900 on the head, the forehead protecting portion 902 abuts on the forehead of the user, and the upper band 904 and the lower band 905 of the head band each abut on a posterior portion of the head. That is, the head-mounted display 900 is worn on the head of the user by being supported at three points of the forehead protecting portion 902, the upper band 904 and the lower band 905. Therefore, the structure of the head-mounted display 900 is different from a structure of normal glasses whose weight is mainly supported at the nose pad portion, and the head-mounted display 900 can be worn while load on the user is reduced by the weight being distributed to the whole of the head. While the illustrated head-mounted display 900 also includes the nose pad potion 903, this nose pad portion 903 only contributes to auxiliary support. Further, by fastening the forehead protecting portion 902 with the head band, it is possible to support motion in the rotation direction so that the head-mounted display 900 does not rotate at the head of the user who wears the head-mounted display 900.

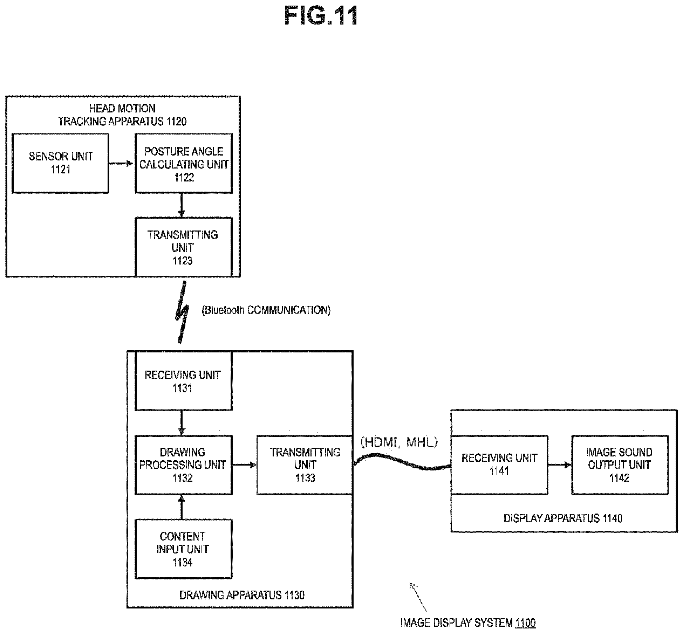

FIG. 11 schematically illustrates a configuration example of the image display system 1100 which reproduces the image information and the sound information recorded together with the position information. The illustrated image display system 1100 includes a head operation tracking apparatus 1120, a drawing apparatus 1130 and a display apparatus 1140.

The display apparatus 1140 which is, for example, configured as the head-mounted display 900 illustrated in FIG. 9 and FIG. 10, is used by being worn on the head of the user who observes an image.

The head motion tracking apparatus 1120 outputs posture information of the head of the user who observes an image displayed at the display apparatus 1140 to the drawing apparatus 1130 for each predetermined transmission cycle. In the illustrated example, the head motion tracking apparatus 1120 includes a sensor unit 1121, a posture angle calculating unit 1122, and a transmitting unit 1123 configured to transmit the obtained posture information to the drawing apparatus 1130.

The head motion tracking apparatus 1120 can be mounted within the body portion 901 of the display apparatus 1140 configured as the head-mounted display 900. However, in this embodiment, in order to make the display apparatus 1140 smaller, lighter and inexpensive, it is assumed that the head motion tracking apparatus 1120 is provided as an optional product externally attached to the display apparatus 1140. The head motion tracking apparatus 1120 is, for example, used by being attached to any location including the upper band 904, the lower band 905 and the forehead protecting portion 902 of the head-mounted display 900 as an accessory.

The sensor unit 1121 is, for example, configured by combining a plurality of sensor elements such as a gyro sensor, an acceleration sensor and a geomagnetic sensor. Here, the sensor unit 1121 is defined as a sensor which can detect total of nine axes including a triaxial gyro sensor, a triaxial acceleration sensor and a triaxial geomagnetic sensor. The posture angle calculating unit 1122 calculates the posture information of the head of the user based on the detection result of the nine axes of the sensor unit 1121. The transmitting unit 1123 transmits the obtained posture information to the drawing apparatus 1130.

In the illustrated image display system 1100, it is assumed that the head motion tracking apparatus 1120 is connected to the drawing apparatus 1130 through wireless communication such as Bluetooth (registered trademark) communication. Of course, the head motion tracking apparatus 1120 may be connected to the drawing apparatus 1130 via a high-speed wired interface such as a universal serial bus (USB) instead of through wireless communication.

The drawing apparatus 1130 performs rendering processing on the image and the sound to be reproduced and to be output at the display apparatus 1140. While the drawing apparatus 1130 is, for example, configured as a terminal employing Android (registered trademark) such as a smartphone, a personal computer, or a game machine, the drawing apparatus 1130 is not limited to these apparatuses. Further, the drawing apparatus 1130 may be a server apparatus on the Internet. The head motion tracking apparatus 1120 transmits the head posture/position information of the user to the server which is the drawing apparatus 1130, and the drawing apparatus 1130 generates a moving image stream corresponding to the received head posture/position information and transmits the moving image stream to the display apparatus 1140.

In the illustrated example, the drawing apparatus 1130 includes a receiving unit 1131 configured to receive posture information from the head motion tracking apparatus 1120, a drawing processing unit 1132 configured to perform rendering processing on an image and sound based on the posture information, a transmitting unit 1133 configured to transmit the rendered image to the display apparatus 1140, and a content input unit 1134 configured to take in a data stream of an image sound from a supply source.

The receiving unit 1131 receives the position information and the posture information of the user from the head motion tracking apparatus 1120 through Bluetooth (registered trademark) communication, or the like. As described above, the posture information is expressed in a rotation matrix.

The content input unit 1134 is formed with, for example, recording apparatuses 140, 340 illustrated in FIG. 1 and FIG. 3, a reproducing apparatus which reads out image and sound content recorded in the recording apparatuses 140, 340 in a format illustrated in FIG. 6, a receiving apparatus (a broadcasting tuner, a communication interface) which receives image and sound content recorded in the recording apparatuses 140, 340 in a format illustrated in FIG. 5 via a network or as a broadcast signal, or the like.

The drawing processing unit 1132 renders the image and sound data supplied from the content input unit 1134 to generate an image and sound to be displayed at the display apparatus 1140 side. In this embodiment, the drawing processing unit 1132 generates an image corresponding to the position and posture information (eye direction) of the user who wears the head-mounted display 900 as the display apparatus 1140 and localizes a sound image at the position of the user, thereby providing content which entertains the user and which prevents the user from being bored, and providing sound with realistic sensation. The processing of rendering the image and the sound at the drawing processing unit 1132 will be described in detail later.

The drawing apparatus 1130 is connected to the display apparatus 1140 using a cable such as, for example, a high definition multimedia interface (HDMI) (registered trademark) and a mobile high-definition link (MHL). Alternatively, the drawing apparatus 1130 may be connected to the display apparatus 1140 through wireless communication such as wireless HD and Miracast. The transmitting unit 1133 transmits the image and sound data rendered at the drawing processing unit 1132 using any communication path without compressing the data.

The display apparatus 1140 includes a receiving unit 1141 configured to receive the image from the drawing apparatus 1130 and an image sound output unit 1142. As described above, the display apparatus 1140 is configured as the head-mounted display 900 which is fixed on the head or the face portion of the user who observes the image. Alternatively, the display apparatus 1140 may be a normal display, a projector which projects an image on a screen in a theater, or the like.

The receiving unit 1141, for example, receives the uncompressed image data and sound data from the drawing apparatus 300 through a communication path such as HDMI (registered trademark) and MHL. The image sound output unit 1142 which is formed with a display and a microphone outputting an image and sound, displays the received image data on a screen and outputs the sound.

When the display apparatus 1140 is configured as the head-mounted display 900, for example, the image sound output unit 1142 includes left and right screens respectively fixed at left and right eyes of the user, and displays an image for left eye and an image for right eye. The screen is, for example, configured with a display panel such as a micro display such as an organic electro-luminescence (EL) element and a liquid crystal display, or a laser scanning type display such as a retinal direct drawing display. Further, the display apparatus 1140 includes a virtual image optical unit configured to enlarge and project a display image and form an enlarged virtual image formed with a predetermined angle of field on pupils of the user.

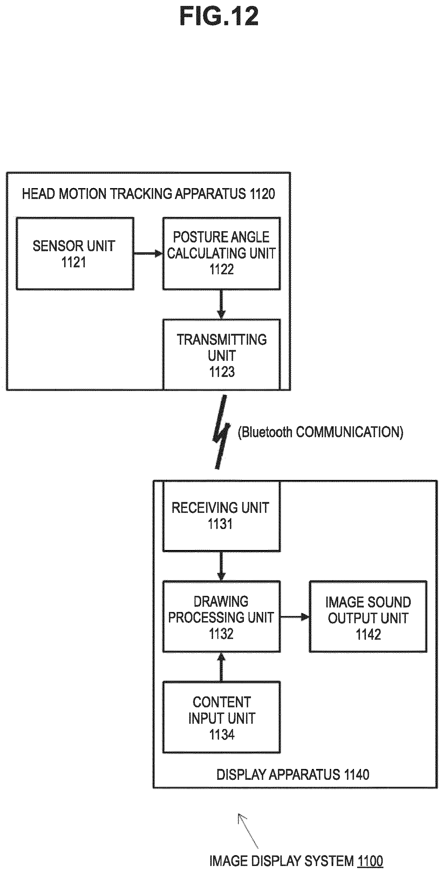

FIG. 12 schematically illustrates a modified example of the image display system 1100. While, in the example illustrated in FIG. 11, the image display system 1100 is configured with three independent apparatuses including the head motion tracking apparatus 1120, the drawing apparatus 1130 and the display apparatus 1140, in the example illustrated in FIG. 12, functions of the drawing apparatus 1130 (that is, the receiving unit 1131, the drawing processing unit 1132 and the content input unit 1134) are mounted within the display apparatus 1140. As illustrated in FIG. 11, by configuring the head motion tracking apparatus 1120 as an optional product externally attached to the display apparatus 1140, the display apparatus 1140 becomes smaller, lighter and inexpensive.

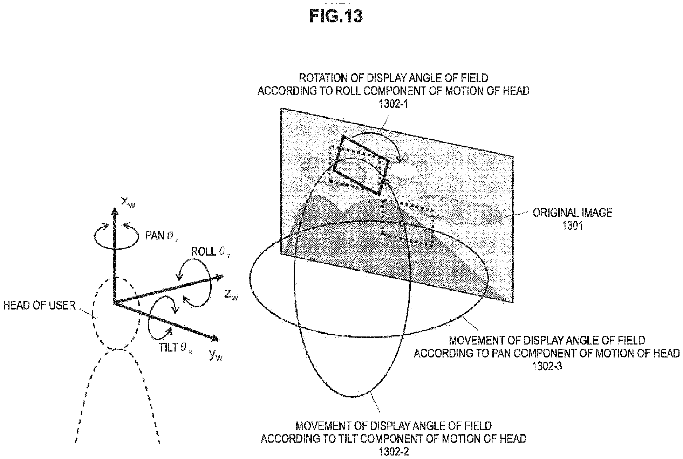

FIG. 13 illustrates a mechanism in which, in the image display system 1100 illustrated in FIG. 11 or FIG. 12, an image following motion of the head, that is, the line of sight of the user is displayed at the display apparatus 1140.

It is assumed that a depth direction of the line of sight of the user is a z_{w} axis, a horizontal direction is a y_{w} axis, a vertical direction is an x_{w} axis, and the position of the origin of a user reference axis x_{w}, y_{w}, z_{w} is the position of the viewpoint of the user. Therefore, roll θ_{z} corresponds to motion around the z_{w} axis of the head of the user, tilt θ_{y} corresponds to motion around the y_{w} axis of the head of the user, and pan θ_{z} corresponds to motion around the x_{w} axis of the head of the user.

The head motion tracking apparatus 1120 detects posture information formed with motion (θ_{z}, θ_{y}, θ_{z}) in each direction of the roll, the tilt and the pan of the head of the user or parallel movement of the head and outputs the posture information to the drawing apparatus 1130 as a rotation matrix M_{R}.

The drawing apparatus 1130 moves the center of a region 1302 to be cut out from an original image 1301 having a wide angle of field such as, for example, an original sphere image and 4K so as to follow the posture of the head of the user and renders an image of a region 502 cut out at the central position at a predetermined angle of field. The drawing apparatus 1130 moves a display region so as to cancel out the motion of the head detected by the head motion tracking apparatus 1120 by rotating a region 1302-1 according to a roll component of the motion of the head of the user, moving a region 1302-2 according to a tilt component of the motion of the head of the user or moving a region 1302-3 according to a pan component of the motion of the head of the user.

The display apparatus 1140 side can present an image in which the display region moves in the original image 1301 so as to follow the motion of the head (line of sight) of the user. Further, the present embodiment has features that a sound image is also localized along with an image so as to follow the motion of the head (line of sight) of the user.

Note that when there is no image shot by a camera corresponding to the viewpoint of the user, the viewpoint is interpolated using two or more images which have relatively close line of sight.

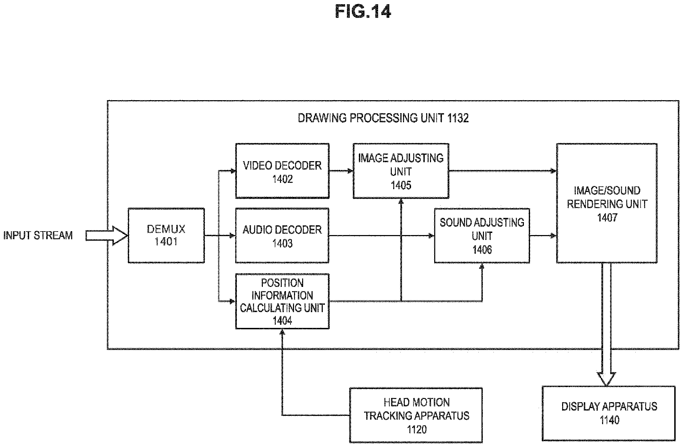

FIG. 14 schematically illustrates a configuration of the drawing processing unit 1132 within the drawing apparatus 1130.

A demultiplexer (DEMUX) 1401 demultiplexes an input stream from the content input unit 1134 into sound information, image information, position information of the sound source and position and posture information of the camera which shoots the image. The position information of the sound is formed with position information of objects such as a microphone used for collecting sound and an utterer. Further, the position information is coordinate information of all the cameras used for shooting.

A video decoder 1402 performs decoding processing on image information such as a moving image demultiplexed from the input stream at the demultiplexer 1401. Further, an audio decoder 1403 performs decoding processing on sound information demultiplexed from the input stream at the demultiplexer 1401.

The position information calculating unit 1404 inputs the position and posture information of the camera which shoots the image and the position information of the sound source, determines the position of the user who views the image, that is, a virtual point in space in which the image and the sound are provided to the user, and calculates the user coordinate. The virtual point is a location where a sound image is to be localized. The virtual point may be, for example, a typical position such as the center of the space in which the image is to be provided, where it is considered that a sound image is preferably localized, and may be a position of the center of gravity of a plurality of cameras used for shooting. Further, the position information calculating unit 1404 further inputs real position information and posture information of the user received from the head motion tracking apparatus 1120 to move the virtual point or change an eye direction on the virtual point. When the drawing apparatus 1130 is the head-mounted display 900, the virtual point corresponds to the position and the posture of the head of the user who wears the head-mounted display 900.

An image adjusting unit 1405 performs processing of adjusting an image subjected to decoding processing at the video decoder 1402 based on the coordinate position of each camera and the virtual point determined by the position information calculating unit 1404. When there is no image shot by a camera having the same viewpoint as that of the user at the virtual point, the image adjusting unit 1405 generates a viewpoint image from the virtual point through viewpoint interpolation using the images shot by two or more cameras relatively close from the virtual point.

Further, a sound adjusting unit 1406 localizes a sound image of the sound of each sound source subjected to decoding processing at the audio decoder 1403 at the virtual point determined by the position information calculating unit 1404. Specifically, the sound adjusting unit 1406 converts absolute position information of an uttering object (or a microphone collecting sound of the uttering object) included in the viewpoint image of the user into relative position with respect to a viewpoint camera of the user to localize a sound image of the uttering object in the viewpoint image. Further, when a viewpoint is interpolated using images shot by a plurality of cameras at the image adjusting unit 1405 as described above, the sound adjusting unit 1406 converts the absolute position information of the uttering object into the relative position information of the viewpoint interpolation camera to localize a sound image of the uttering object in the viewpoint interpolated image. By this means, it is possible to resolve unnaturalness that the position of the sound image rapidly changes when the angle of the viewpoint camera is switched. The sound image can be localized using a method using a speaker array such as wavefront synthesis.

An image/sound rendering unit 1407 performs processing of synchronizing the image processed at the image adjusting unit 1405 and the sound image processed at the sound adjusting unit 1406 and outputs the synchronized image and sound image to the display apparatus 1140 using, for example, an HDMI (registered trademark) interface.

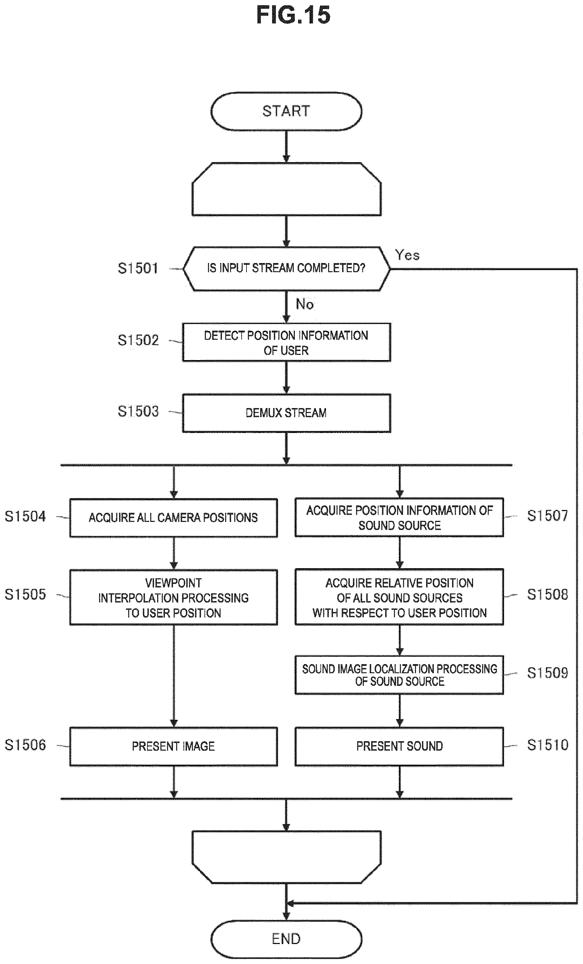

FIG. 15 illustrates processing procedure of reproducing an image and sound in a flowchart format.

The position information of the user is detected using, for example, the head motion tracking apparatus 1120 (step S1502). Further, the demultiplexer 1401 demultiplexes the input stream into the sound information, the image information and the position information of the sound and the image (step S1503). Then, until the input stream is completed (step S1501: No), processing of the image information and processing of sound information which will be described below are performed in parallel.

The image adjusting unit 1405 inputs the image shot by each camera subjected to decoding processing at the video decoder 1402 (step S1504), inputs the coordinate position of each camera and the user coordinate at the virtual point determined by the position information calculating unit 1404, to generate a viewpoint image of the user (step S1505). When there is no image shot by a camera provided at the user coordinate, the image adjusting unit 1405 generates a viewpoint image from the virtual point through viewpoint interpolation using images shot by two or more cameras relatively close from the virtual point. Then, the generated viewpoint image is output to the display apparatus 1140 while the image is made in synchronization with the sound image and presented to the user (step S1506).

Further, when the sound adjusting unit 1406 acquires absolute position information of all the sound sources (or a microphone collecting sound of the uttering object) (step S1507), the sound adjusting unit 1406 converts the absolute position information into relative position with respect to the position coordinate of the virtual point (or the viewpoint camera of the user) (step S1508) and localizes a sound image of each sound source in the viewpoint image (step S1509). Then, the generated sound image is output to the display apparatus 1140 while the sound image is made in synchronization with the image and presented to the user (step S1510).

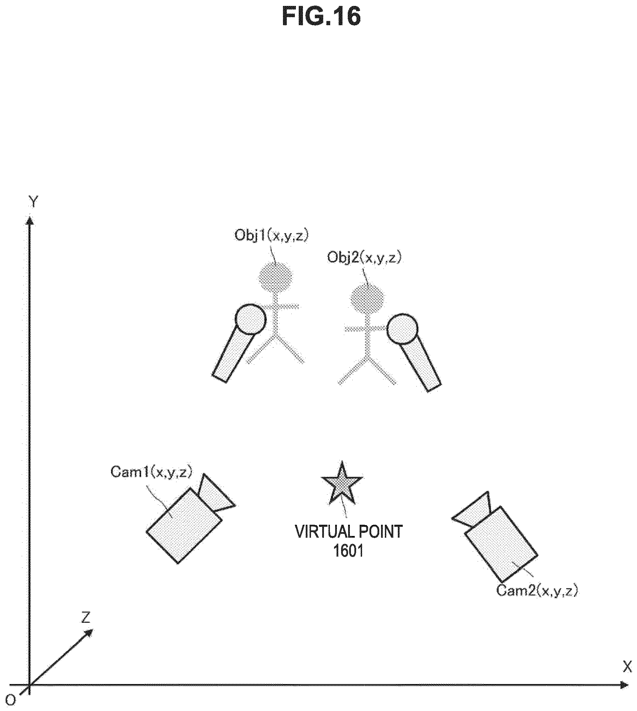

FIG. 16 illustrates an aspect where a virtual point 1601 is determined and disposed in space in which an image and sound are provided to the user. The virtual point 1601 is a location where the sound image is to be localized.

When an image to be presented to the user is a promotional film or live distribution, the position information calculating unit 1404 determines a location (or a typical location) where it is considered that a sound image is preferably localized at an original site as the virtual point 1601. In the example illustrated in FIG. 16, at the shooting location, two cameras Cam 1 and Cam 2 are provided to shoot two utterers Obj 1 and Obj 2. For example, when a viewpoint interpolated image is generated using images shot by a plurality of cameras Cam 1 and Cam 2, the center of gravity of the cameras Cam 1 and Cam 2 may be determined as the virtual point 1601. Further, it is also possible to weight the position information of each of the cameras Cam 1 and Cam 2 based on a frequency of punning and switching, calculate the central position and set the central position as the virtual point 1601.

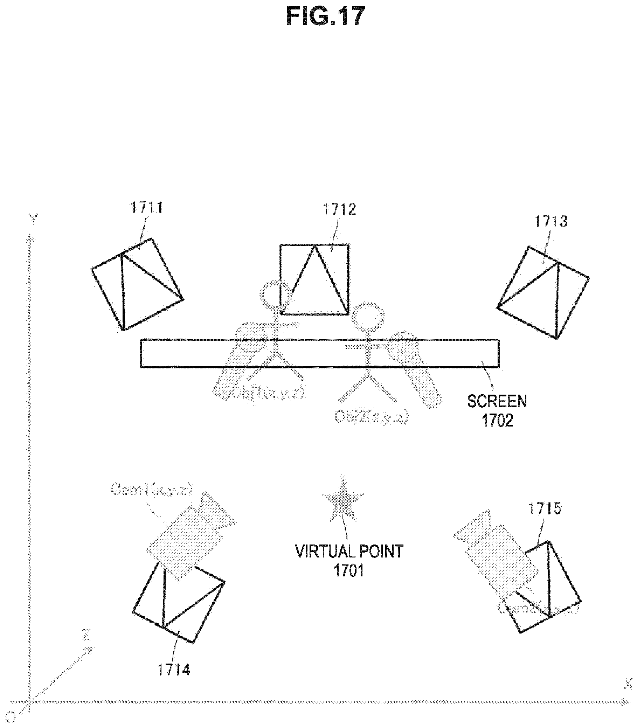

Further, FIG. 17 illustrates an aspect where, when an image and sound are reproduced, a sound image is localized at a virtual point 1701. When a promotional film or a live distribution image is reproduced at a theater, the image is presented by being projected on a screen 1702 so as to make the center of seats within the theater conform to the virtual point determined as illustrated in FIG. 16. Further, in the theater, three speakers 1711, 1712 and 1713 are provided in an anterior portion, and two speakers 1714 and 1715 are provided in a posterior portion, so that a 5.1 channel surround type speaker is configured. When a sound source is rendered in accordance with presentation of the image on the screen 1702, a sound image localization method using speaker arrays 1711 to 1715 such as 5.1 channel punning (change of sound image localization in a horizontal direction) and wavefront synthesis is used to reproduce realistic sensation which allows the user to feel as if he/she were in the scene.

When a position coordinate of a sound image is determined for one camera (see, for example, Patent Literatures 1 and 2), sound image localization changes upon punning or switching of screens, and a phenomenon occurs that the user does not know where he/she listens to the sound. When the camera angle is switched, because the relative position from the camera to the sound source also changes, the position where the sound image is localized rapidly changes, which is unnatural. In contrast to this, in this embodiment, the absolute position information of the uttering object is converted into relative position information with respect to the position of the user (that is, the virtual point 1701) provided within the theater, and the sound image of the uttering object is localized with respect to the seat position within the theater. By this means, it is possible to avoid a phenomenon that the user does not know where he/she listens to the sound.

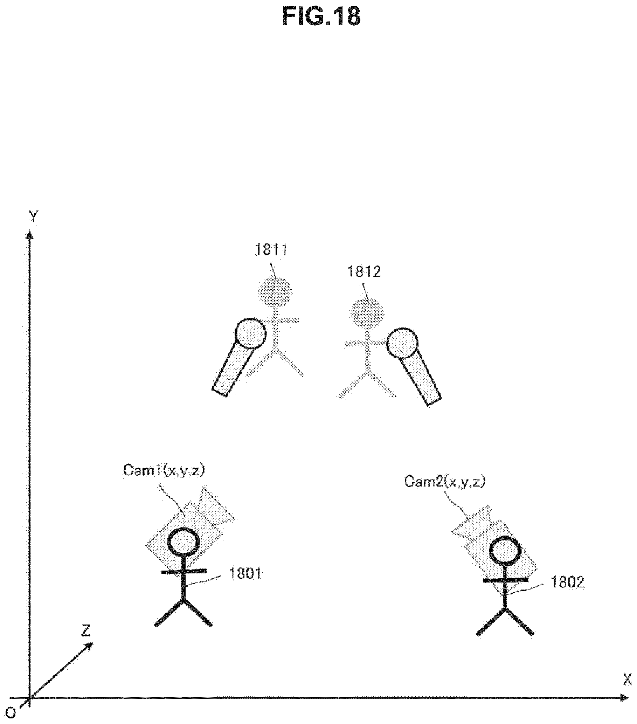

Further, FIG. 18 illustrates an aspect where the viewpoint image of each camera is reproduced at the head-mounted display. In the illustrated example, each shot image is reproduced while wearers 1801 and 1802 of the head-mounted display are respectively mapped at the position of any of the cameras Cam 1 and Cam 2 which shoot the uttering objects 1811 and 1812. In such a case, the absolute position information of each uttering object in the shot image is converted into relative position information with respect to any of the cameras Cam 1 and Cam 2, and the sound image is localized with respect to the position of the camera which shoots the uttering object. Therefore, even if the image is presented while viewpoints of a plurality of cameras are switched, because the sound image is presented at the uttering object in the presented image, each of the users 1801 and 1802 knows where he/she listens to the sound, so that the users can enjoy sound image localization.

There is also a possible method in which relative position information of each shot uttering object is recorded for each of the cameras Cam 1 and Cam 2 which shoot the uttering object. In this case, there is a problem that the relative position information of the uttering object increases in accordance with increase of the number of cameras provided, that is, the number of viewpoints. In contrast to this, in this embodiment, because the recording apparatuses 140 and 340 record absolute position information for each uttering object, and upon reproduction of an image and sound, the absolute position information is converted into the relative position information with respect to the camera every time the viewpoint is switched to localize a sound image, there is no problem that the position information of the uttering object increases in accordance with increase of the number of viewpoints.

Further, also in service in which the user enjoys him/herself by arbitrarily switching a viewpoint, other than a case where the head-mounted display is used, localization of a sound image from a position of the switched viewpoint camera corresponds to localization of a sound image from the position of a virtual point 1601 determined in a theater in FIG. 16.

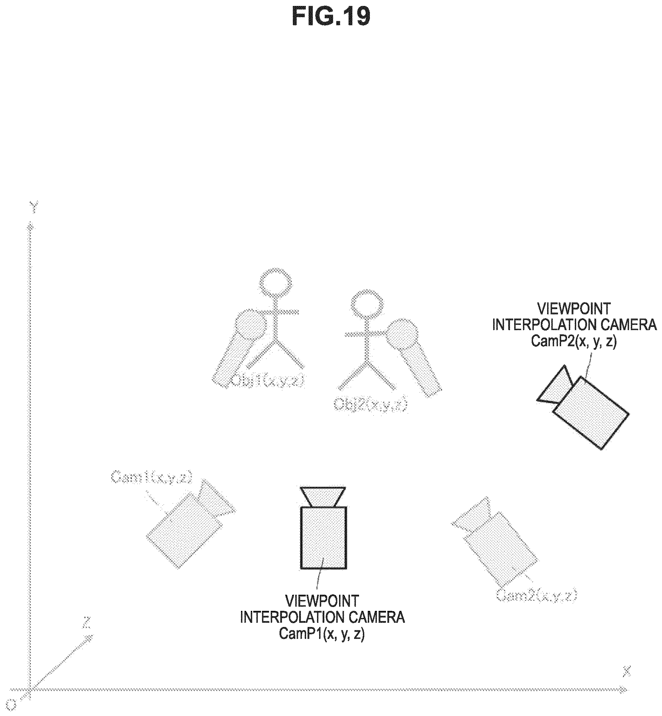

Further, FIG. 19 illustrates an example where an image of a viewpoint disposed at an arbitrary position is presented in space where an image and sound are provided to the user. In the illustrated example, the viewpoint of the user is disposed at a position different from either of the cameras Cam 1 and Cam 2 which shoot the uttering objects Obj 1 and Obj 2. When the viewpoint of the user is disposed at a position between the camera Cam 1 and the camera Cam 2, a viewpoint interpolation camera Cam P1 is provided, images shot by the camera Cam 1 and the camera Cam 2 are synthesized to generate a viewpoint interpolated image shot at the viewpoint interpolation camera Cam P1. Further, absolute position information of the uttering objects Obj 1 and Obj 2 is converted into relative position information with respect to the viewpoint interpolation camera Cam P1 to localize a sound image with respect to the viewpoint interpolation camera Cam P1. The viewpoint interpolated image at the viewpoint interpolation camera Cam P2 is presented in a similar manner. Therefore, because the viewpoint interpolated image is presented also at a viewpoint at which an actual camera which performs shooting is not provided, and a sound image is presented to the uttering object in the viewpoint interpolated image, the user can know where he/she listens to the sound, and thus can enjoy localization of a sound image.

There is also a possible method in which relative position information of each shot uttering object is recorded for each of the cameras Cam 1 and Cam 2 which shoot the uttering object. In this case, because the relative position between the cameras is calculated mainly based on sound source position information of the uttering object recorded asynchronously between the cameras, the processing is not efficient. In contrast to this, in this embodiment, because absolute position information is recorded for each uttering object, and, upon generation of a viewpoint interpolated image, the absolute position information of each uttering object in the image is converted into relative position information with respect to the viewpoint interpolation image camera, the processing is efficient.

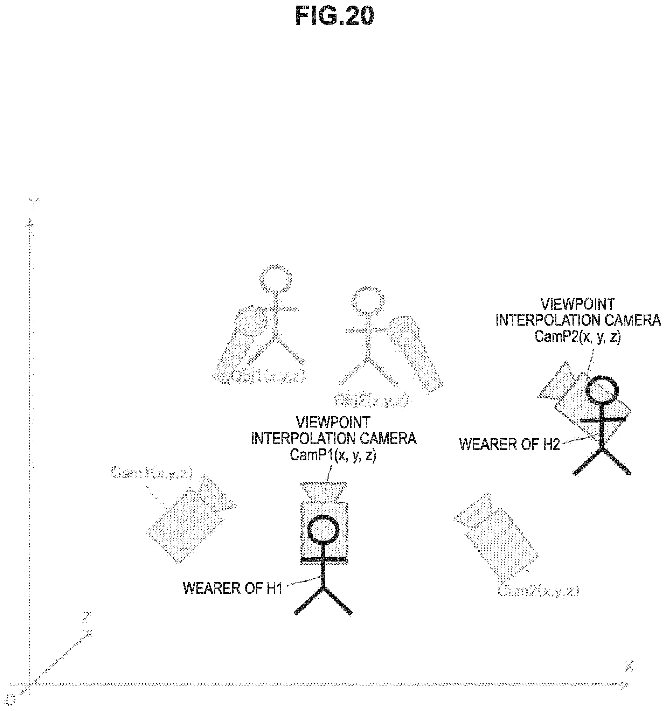

Further, FIG. 20 illustrates an aspect where the viewpoint interpolated image is reproduced at the head-mounted display. In the illustrated example, a viewpoint interpolated image is reproduced while a head-mounted display H1 is mapped to a position of the viewpoint interpolation camera Cam P1. Further, absolute position information of each of the uttering objects Obj 1 and Obj 2 in the viewpoint interpolated image is converted into relative position information with respect to the viewpoint interpolation camera Cam P1 to localize a sound image with respect to the viewpoint interpolation camera Cam P1. The viewpoint interpolated image at the viewpoint interpolation camera Cam P2 is presented at a head-mounted display H2 in a similar manner. Therefore, it is possible to present a viewpoint interpolated image also at an arbitrary viewpoint where an actual camera which performs shooting is not provided and realize correct localization of a sound image from the position of the uttering object in the viewpoint interpolated image.

When the user enjoys an image of a recorded position (camera position) or an image of an arbitrary viewpoint using a rendering apparatus such as a normal display and screen and a head-mounted display, it is also possible to realize conversation as if uttering objects were there by providing a microphone at the rendering apparatus.

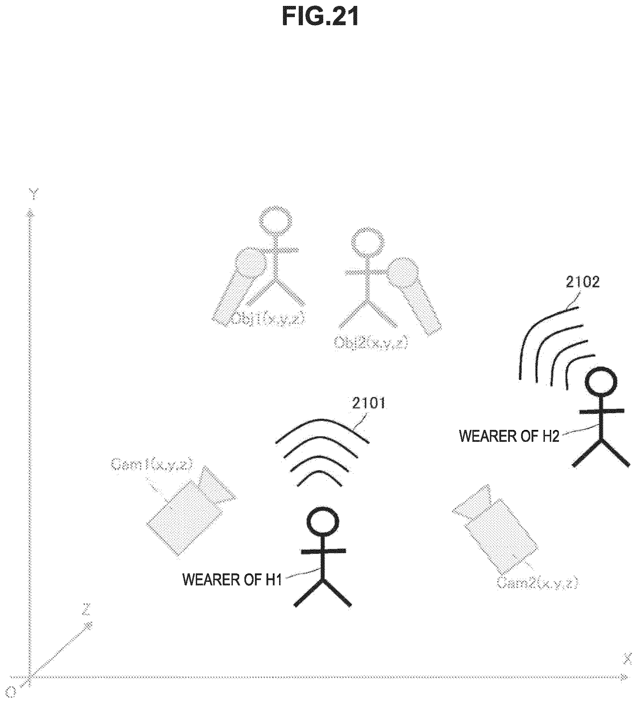

FIG. 21 illustrates an aspect where a wearer of the head-mounted display which reproduces an image is also handled as an uttering object, and a sound image of the utterance content is localized. When a microphone is mounted on the head-mounted display H1, a user who wears the head-mounted display H1 is also handled as an uttering object, and a sound image of each of the uttering objects Obj 1 and Obj 2 in the viewpoint interpolated image is localized, while a sound image of sound 2101 collected at the microphone of the head-mounted display H1 is localized from a direction of H1 and reproduced. Further, in a similar manner, when a microphone is mounted on the head-mounted display H2, a user who wears the head-mounted display H2 is also handled as the uttering object, and a sound image of each of the uttering objects Obj 1 and Obj 2 in the viewpoint interpolated image is localized, while a sound image of sound 2102 collected at the microphone of the head-mounted display H2 is localized from a direction of H2 and reproduced. By this means, each of the users who wear the head-mounted displays H1 and H2 can have a conversation as if they were there.

Further, the head-mounted displays H1 and H2 may display avatars or position information at a location corresponding to the other user in a viewpoint interpolated image of each user to specify their existence. Further, when there is a reproducing apparatus such as a speaker array 1201 in a live event place, or the like, it is possible to reproduce sound of cheering 2101 and 2102 of audience who wear the head-mounted display H1 toward the uttering objects Obj 1 and Obj 2 which are performers from a position of the audience.

In this manner, by reflecting motion of performers and audience in real time upon a live concert, they can have experience which is further interactive and has realistic sensation.

The foregoing thus describes the technology disclosed in this specification in detail and with reference to specific embodiments. However, it is obvious that persons skilled in the art may make modifications and substitutions to these embodiments without departing from the spirit of the technology disclosed in this specification.

The technology disclosed in this specification can be applied to a case where sound is presented along with an image using various rendering apparatuses such as a normal display and screen and a head-mounted display to realize correct localization of a sound image.

Essentially, the technology disclosed in this specification has been described by way of example, and the stated content of this specification should not be interpreted as being limiting. The spirit of the technology disclosed in this specification should be determined in consideration of the claims.

Additionally, the present technology may also be configured as below.
(1) An information reproducing apparatus including:
   a position information calculating unit configured to calculate a position of a viewer in space in which an image and sound are provided;
   an image processing unit configured to process an image at the position of the viewer based on image information recorded with position and posture information of a camera; and
   a sound processing unit configured to localize a sound image at the position of the viewer based on sound information recorded with position information of a sound source.
(2) The information reproducing apparatus according to (1),
   wherein the position information calculating unit calculates the position of the viewer based on the position and posture information of the camera used for shooting.
(3) The information reproducing apparatus according to (1) or (2),
   wherein the position information calculating unit calculates the position of the viewer based on actual motion or an actual position of the viewer.
(4) The information reproducing apparatus according to (1) or (2),
   wherein the position information calculating unit calculates the position of the viewer based on a position of a center of gravity among a plurality of cameras.
(5) The information reproducing apparatus according to (1) or (2),
   wherein the position information calculating unit calculates the position of the viewer based on a position of a center of gravity among a plurality of cameras, weighted based on a frequency of punning and switching.
(6) The information reproducing apparatus according to any of (1) to (5),
   wherein the image processing unit generates an image at the position of the viewer based on an image of a camera shot by a camera at the position of the viewer.
(7) The information reproducing apparatus according to any of (1) to (7),
   wherein the image processing unit generates a viewpoint interpolated image at the position of the viewer using images shot by a plurality of cameras.
(8) The information reproducing apparatus according to (7),
   wherein the sound processing unit localizes a sound image at a position at which a viewpoint is interpolated.
(9) The information reproducing apparatus according to (7) or (8),
   wherein the sound processing unit localizes a sound image based on a position at which a viewpoint of utterance information collected from the viewer is interpolated.
(10) The information reproducing apparatus according to (7) or (8),
   wherein the image processing unit displays an avatar or position information of the viewer at a location corresponding to the viewer in the viewpoint interpolated image.
(11) The information reproducing apparatus according to any of (1) to (10),
   wherein the sound processing unit converts absolute position information of a sound source included in a viewpoint image from the position of the viewer into a relative position with respect to the position of the viewer to localize a sound image of a sound image in the viewpoint image.
(12) An information reproducing method including:
   a position information calculating step of calculating a position of a viewer in space in which an image and sound are provided;
   an image processing step of processing an image at the position of the viewer based on image information recorded with position and posture information of a camera; and
   a sound processing step of localizing a sound image at the position of the viewer based on sound information recorded with position information of a sound source.
(13) An information recording apparatus including:
   an image information recording unit configured to record an image shot by a camera and position and posture information of the camera; and
   a sound information recording unit configured to record position information of a sound source.
(14) The information recording apparatus according to (13),
   wherein the image information recording unit records the image shot by the camera and the position and posture information of the camera in a packet form for an image, and
   the sound information recording unit records the position information of the sound source in a packet form for sound.
(15) The information recording apparatus according to (13),
   wherein the image information recording unit records the image shot by the camera and the position and posture information of the camera in tracks for an image, and
   the sound information recording unit records the position information of the sound source in a track for sound.
(16) The information recording apparatus according to any of (13) to (15),
   wherein the image information recording unit records a shot image received from the camera and position and posture information received from a camera position sensor.
(17) The information recording apparatus according to any of (13) to (15),
   wherein the sound information recording unit records the position information of the sound source received from a sound source detecting apparatus.
(18) The information recording apparatus according to any of (13) to (17),
   wherein the sound information recording unit records sound information received from a sound source detecting apparatus or sound information recorded later together with position information of the sound source.
(19) The information recording apparatus according to any of (13) to (18),
   wherein the position and posture information of the camera and the position information of the sound source are recorded in synchronization with a synchronization signal (clock) for image recording or based on a timing signal of frequency dividing or decimation.
(20) An information recording method including:
   a step of receiving an image shot by a camera and position and posture information of the camera;
   a step of recording the received image shot by the camera and the received position and posture information of the camera;
   a step of receiving position information of a sound source; and
   a sound information recording unit configured to record the received position information of the sound source.
(21) An information recording and reproducing system including:
   a recording apparatus configured to record sound information with position information of a sound source while recording a shot image with position and posture information of a camera; and
   a reproducing apparatus configured to present an image from a viewpoint of a viewer using the image recorded with the position and posture information while placing a position of the viewer at a certain point, and localize a sound image at the position of the viewer based on the recorded sound information and the position information.

### Reference Signs List

- 100: recording system
- 110-1, 110-2: camera
- 120-1, 120-2: microphone
- 130: synchronization signal generating apparatus
- 140: recording apparatus
- 300: recording system
- 310-1, 310-2: camera
- 320-1, 320-2: sound position sensor
- 330: synchronization signal generating apparatus
- 340: position information receiving apparatus
- 350: recording apparatus
- 900: head-mounted display
- 901: body portion
- 902: forehead protecting portion
- 903: nose pad portion
- 904: upper band
- 905: lower band
- 1100: image display system
- 1120: head motion tracking apparatus
- 1121: sensor unit
- 1122: posture angle calculating unit
- 1123: transmitting unit
- 1130: drawing apparatus
- 1131: receiving unit
- 1132: drawing processing unit
- 1133: transmitting unit
- 1134: content input unit
- 1140: display apparatus
- 1141: receiving unit
- 1142: image sound output unit
- 1401: demultiplexer
- 1402: video decoder
- 1403: audio decoder
- 1404: position information calculating unit
- 1405: image adjusting unit
- 1406: sound adjusting unit
- 1407: image/sound rendering unit

## Claims

1. An information reproducing apparatus comprising:
a position information calculating unit configured to calculate a position of a viewer in space in which an image and sound are provided;
an image processing unit configured to process an image at the position of the viewer based on image information recorded with position and posture information of a camera; and
a sound processing unit configured to localize a sound image at the position of the viewer based on sound information recorded with position information of a sound source.

2. The information reproducing apparatus according to claim 1,
wherein the position information calculating unit calculates the position of the viewer based on the position and posture information of the camera used for shooting.

3. The information reproducing apparatus according to claim 1,
wherein the position information calculating unit calculates the position of the viewer based on actual motion or an actual position of the viewer.

4. The information reproducing apparatus according to claim 1,
wherein the position information calculating unit calculates the position of the viewer based on a position of a center of gravity among a plurality of cameras.

5. The information reproducing apparatus according to claim 1,
wherein the position information calculating unit calculates the position of the viewer based on a position of a center of gravity among a plurality of cameras, weighted based on a frequency of punning and switching.

6. The information reproducing apparatus according to claim 1,
wherein the image processing unit generates an image at the position of the viewer based on an image of a camera shot by a camera at the position of the viewer.

7. The information reproducing apparatus according to claim 1,
wherein the image processing unit generates a viewpoint interpolated image at the position of the viewer using images shot by a plurality of cameras.

8. The information reproducing apparatus according to claim 7,
wherein the sound processing unit localizes a sound image at a position at which a viewpoint is interpolated.

9. The information reproducing apparatus according to claim 7,
wherein the sound processing unit localizes a sound image based on a position at which a viewpoint of utterance information collected from the viewer is interpolated.

10. The information reproducing apparatus according to claim 7,
wherein the image processing unit displays an avatar or position information of the viewer at a location corresponding to the viewer in the viewpoint interpolated image.

11. The information reproducing apparatus according to claim 1,
wherein the sound processing unit converts absolute position information of a sound source included in a viewpoint image from the position of the viewer into a relative position with respect to the position of the viewer to localize a sound image of a sound image in the viewpoint image.

12. An information reproducing method comprising:
a position information calculating step of calculating a position of a viewer in space in which an image and sound are provided;
an image processing step of processing an image at the position of the viewer based on image information recorded with position and posture information of a camera; and
a sound processing step of localizing a sound image at the position of the viewer based on sound information recorded with position information of a sound source.

13. An information recording apparatus comprising:
an image information recording unit configured to record an image shot by a camera and position and posture information of the camera; and
a sound information recording unit configured to record position information of a sound source.

14. The information recording apparatus according to claim 13,
wherein the image information recording unit records the image shot by the camera and the position and posture information of the camera in a packet form for an image, and
the sound information recording unit records the position information of the sound source in a packet form for sound.

15. The information recording apparatus according to claim 13,
wherein the image information recording unit records the image shot by the camera and the position and posture information of the camera in tracks for an image, and
the sound information recording unit records the position information of the sound source in a track for sound.

16. The information recording apparatus according to claim 13,
wherein the image information recording unit records a shot image received from the camera and position and posture information received from a camera position sensor.

17. The information recording apparatus according to claim 13,
wherein the sound information recording unit records the position information of the sound source received from a sound source detecting apparatus.

18. The information recording apparatus according to claim 13,
wherein the sound information recording unit records sound information received from a sound source detecting apparatus or sound information recorded later together with position information of the sound source.

19. The information recording apparatus according to claim 13,
wherein the position and posture information of the camera and the position information of the sound source are recorded in synchronization with a synchronization signal (clock) for image recording or based on a timing signal of frequency dividing or decimation.

20. An information recording method comprising:
a step of receiving an image shot by a camera and position and posture information of the camera;
a step of recording the received image shot by the camera and the received position and posture information of the camera;
a step of receiving position information of a sound source; and
a sound information recording unit configured to record the received position information of the sound source.
